(19) Europäisches Patentamt
European Patent Office
Office européen des brevets

(11) **EP 3 429 207 A1**

(12) **EUROPEAN PATENT APPLICATION**

(43) Date of publication:
**16.01.2019 Bulletin 2019/03**

(51) Int Cl.:
*H04N 19/597* (2014.01)  *G06T 17/00* (2006.01)
*G06T 17/10* (2006.01)  *G06T 9/40* (2006.01)
*H04N 19/96* (2014.01)  *H04N 19/20* (2014.01)
*H04N 19/147* (2014.01)  *H04N 19/103* (2014.01)
*H04N 19/46* (2014.01)

(21) Application number: **17305927.0**

(22) Date of filing: **13.07.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **LASSERRE, Sebastien
35576 CESSON-SEVIGNE (FR)**
• **RICARD, Julien
35576 CESSON-SEVIGNE (FR)**
• **LLACH, Joan
35576 CESSON-SEVIGNE (FR)**

(74) Representative: **Huchet, Anne et al
InterDigital CE Patent Holdings
20, rue Rouget de Lisle
92130 Issy-les-Moulineaux (FR)**

(54) **A METHOD AND APPARATUS FOR ENCODING/DECODING A COLORED POINT CLOUD REPRESENTING THE GEOMETRY AND COLORS OF A 3D OBJECT**

(57)    The present principles relate to a method and a device for encoding an input colored point cloud representing the geometry and colors of a 3D object. The method comprises:

a) determining a coding cost for an octree-based coding mode;

b) determining a coding cost for a projection-based coding mode

c) encoding the input colored point cloud according to a coding mode associated with a minimal coding cost; and

d) encoding a coding mode information data representative of the coding mode associated with the minimal cost.

depth 0

depth 1

maximum depth

**Fig. 1**

**Description**

**1. Field.**

The present principles generally relate to coding and decoding of a colored point cloud representing the geometry and colors of a 3D object. Particularly, but not exclusively, the technical field of the present principles are related to encoding/decoding of 3D image data that uses a texture and depth projection scheme.

**2. Background.**

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

A point cloud is a set of points usually intended to represent the external surface of a 3D object but also more complex geometries like hair, fur that may not be represented efficiently by other data format like meshes. Each point of a point cloud is often defined by a 3D spatial location ($X, Y,$ and $Z$ coordinates in the 3D space) and possibly by other associated attributes such as color, represented in the RGB or YUV color space for example, a transparency, a reflectance, a two-component normal vector, etc.

In the following, a colored point cloud is considered, i.e. a set of 6-component points (X, Y, Z, R, G, B) or equivalently (X, Y, Z, Y, U, V) where (X,Y,Z) defines the spatial location of a point in a 3D space and (R,G,B) or (Y,U,V) defines a color of this point.

Colored point clouds may be static or dynamic depending on whether or not the cloud evolves with respect to time. It should be noticed that in case of a dynamic point cloud, the number of points is not constant but, on the contrary, generally evolves with time. A dynamic point cloud is thus a time-ordered list of sets of points.

Practically, colored point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such colored point clouds are typically static and huge.

Another use case is in topography and cartography in which, by using 3D representations, maps are not limited to the plane and may include the relief.

Automotive industry and autonomous cars are also domains in which point clouds may be used. Autonomous cars should be able to "probe" their environment to take safe driving decision based on the reality of their immediate neighboring. Typical sensors produce dynamic point clouds that are used by the decision engine. These point clouds are not intended to be viewed by a human being. They are typically small, not necessarily colored, and dynamic with a high frequency of capture. They may have other attributes like the reflectance that is a valuable information correlated to the material of the physical surface of sensed object and may help the decision.

Virtual Reality (VR) and immersive worlds have become a hot topic recently and foreseen by many as the future of 2D flat video. The basic idea is to immerse the viewer in an environment all round him by opposition to standard TV where he can only look at the virtual world in front of him. There are several gradations in the immersivity depending on the freedom of the viewer in the environment. Colored point clouds are a good format candidate to distribute VR worlds. They may be static or dynamic and are typically of averaged size, say no more than a few millions of points at a time.

Point cloud compression will succeed in storing/transmitting 3D objects for immersive worlds only if the size of the bitstream is low enough to allow a practical storage/transmission to the end-user.

It is also crucial to be able to distribute dynamic colored point clouds to the end-user with a reasonable consumption of bandwidth while maintaining an acceptable (or preferably very good) quality of experience. Similarly to video compression, a good use of temporal correlation is thought to be the crucial element that will lead to efficient compression of dynamic point clouds.

Well-known approaches project a colored point cloud representing the geometry and colors of a 3D object, onto the faces of a cube encompassing the 3D object to obtain videos on texture and depth, and code the texture and depth videos using a legacy encoder such as 3D-HEVC (an extension of HEVC whose specification is found at the ITU website, T recommendation, H series, h265, http://www.itu.int/rec/T-REC-H.265-201612-I/en annex G and I).

Performance of compression is close to video compression for each projected point, but some contents may be more complex because of occlusions, redundancy and temporal stability when dynamic point clouds are considered. Consequently, point cloud compression is more demanding than video compression in term of bit-rates.

Regarding occlusions, it is virtually impossible to get the full geometry of a complex topology without using many projections. The required resources (computing power, storage memory) for encoding/decoding all these projections are thus usually too high.

Regarding redundancy, if a point is seen twice on two different projections, then its coding efficiency is divided by two, and this can easily get much worse if a high number of projections is used. One may use non-overlapping patches before projection, but this makes the projected partition boundary unsmooth, thus hard to code, and this negatively impacts the coding performance.

Regarding temporal stability, non-overlapping patches before projection may be optimized for an object at a given time but, when this object moves, patch boundaries also move and temporal stability of the regions hard to code (= the boundaries) is lost. Practically, one gets compression performance not much better than all-intra coding because the temporal inter prediction is inefficient in this context.

Therefore, there is a trade-off to be found between seeing points at most once but with projected images that are not well compressible (bad boundaries), and getting well compressible projected images but with some points seen several times, thus coding more points in the projected images than actually belonging to the model.

Octree-based encoding is also a well-known approach for encoding the geometry of a point cloud. An octree-based structure is obtained for representing the geometry of the point cloud by splitting recursively a cube encompassing the point cloud until the leaf cubes, associated with the leaf nodes of said octree-based structure, contain no more than one point of the point cloud. The spatial locations of the leaf nodes of the octree-based structure thus represent the spatial locations of the points of the point cloud, i.e. its geometry.

Such splitting process requires important resources in term of computing power because the splitting decision are done over the whole point cloud which may comprise a huge number of points.

So, the advantage of octrees is, by construction, to be able to deal with any geometry with a minor impact of the geometry complexity on the efficiency of compression. Sadly, there is a big drawback: on smooth geometries, the prior art on octree shows us that the compression efficiency of octrees is much less that projection-based coding.

Therefore, there is a trade-off to be found between obtaining a good representation of the geometry of a point cloud (octrees are best for complex geometries) and the compression capability of the representation (projections are best for smooth geometries).

## 3. Summary.

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

Generally speaking, the present principles solve at least one of the above drawbacks by is mixing both projections and octrees in a single encoding scheme such that one can benefit from the advantages of both technologies, namely efficient compression and resilience to complex geometry.

The present principles relate to a method and a device for encoding an input colored point cloud representing the geometry and colors of a 3D object. The method comprises:

a) determining, for an octree-based coding mode associated with an encompassing cube including the points of the input point cloud, a best octree-based structure from a plurality of candidate octree-based structures by optimizing a trade-off between a bit-rate for encoding a candidate octree-based structure approximating the geometry of original points of the input colored point cloud which are included in said encompassing cube and for encoding their colors, and a distortion taking into account spatial distances and color differences between, on one hand, said original points, and on the other hand, leaf points included in leaf cubes associated with leaf nodes of the candidate octree-based structure;

b) determining, for a projection-based coding mode associated with the same encompassing cube, a best projection of said points from a plurality of candidate projections by optimizing a trade-off between a bit-rate for encoding at least one pair of a texture and depth images associated with a candidate projection approximating the geometry and colors of said original points and a distortion taking into account spatial distances and color differences between, on one hand, the points of the input colored point cloud which are included in the encompassing cube and, on the other hand, inverse-projected points obtained by inverse-projecting at least one pair of an encoded/decoded texture and an encoded/decoded depth images associated with said candidate projection;

c) encoding said original points according to a coding mode associated with a minimal coding cost; and

d) encoding a coding mode information data representative of the coding mode associated with the minimal cost.

According to an embodiment, the method also comprises steps of or the device also comprises means for:

- determining an octree-based structure comprising at least one cube, by splitting recursively said encompassing cube until the leaf cubes, associated with the leaf nodes of said octree-based structure, reach down an expected size;

- encoding a splitting information data representative of said octree-based structure;
- determining if a leaf cube associated with a leaf node of said octree-based structure included at least one point of the input colored point cloud;
- encoding said leaf cube from steps a-d); and
- encoding a cube information data indicating if a leaf cube is coded or not.

According to an embodiment, encoding said original points according to the octree-based coding mode comprises:

- encoding an octree information data representative of said best candidate octree-based structure, and a leaf node information data indicating if a leaf cube of said best octree-based structure includes a leaf point representative of the geometry of at least one of said original point; and
- encoding a color associated with each leaf point included in a leaf cube associated with a leaf node of the best candidate octree-based structure.

According to an embodiment, encoding said original points according to the projection-based coding mode comprises:

- encoding at least one pair of texture and depth images obtained by orthogonally projecting said original points onto at least one face of either said encompassing cube or said leaf cube;
- encoding projection information data representative of the faces used by the best projection.

According to another of their aspects, the present principles relate to a method and a device for decoding, from a bitstream, a colored point cloud representing a 3D object. The method comprises:

e) obtaining a coding mode information data indicating if either an octree-based decoding mode or a projection-based decoding mode is used for obtaining a decoded colored point cloud;
f) if the coding mode information data is representative of an octree-based coding mode, the method comprises:

- obtaining an octree information data representative of an octree-based structure, a leaf node information data indicating if a leaf cube of said octree-based structure includes a leaf point, and a color for each of said leaf point;
- obtaining said octree-based structure from the octree information data;
- depending on the leaf node information data, associating a leaf point with a leaf cube associated with a leaf node of said octree-based structure; and
- assigning the obtained color to each of said leaf point;

g) if the coding mode information data representative of a projection-based coding mode, the method comprises:

- decoding projection information data representative of at least one face of a cube;
- decoding at least one pair of texture and depth images;
- obtaining inverse-projected points from said at least one pair of decoded texture and depth images according to said projection information data.

According to an embodiment, the method also comprises steps of or the device also comprises means for:

- obtaining a splitting information data representative of an octree-based structure;
- obtaining a cube information data indicating if leaf cube associated with a leaf node of said octree-based structure is coded or not;
- obtaining a local decoded colored point cloud for at least one leaf cube by decoding said at least one leaf cube from steps e-g when said cube information data indicates that a leaf cube has to be decoded; and
- fusing said at least one local decoded colored point cloud together to obtain the decoded colored point cloud.

According to another of their aspectsn the present principles relate to a signal carrying on a coding mode information data representative of either an octree-based coding mode associated with an encompassing cube including the points of the input point cloud or a projection-based coding mode associated with the same encompassing cube.
The specific nature of the present principles as well as other objects, advantages, features and uses of the present principles will become evident from the following description of examples taken in conjunction with the accompanying drawings.

## 4. Brief Description of Drawings.

In the drawings, examples of the present principles are illustrated. It shows:

- **Fig. 1** illustrates an example of an octree-based structure;
- **Fig. 2** shows schematically a diagram of the steps of the method for encoding the geometry of a point cloud representing a 3D object in accordance with an example of the present principles;
- **Fig. 2b** shows schematically a variant of the method of **Fig. 2;**
- **Fig. 3** shows the diagram of the sub-steps of the step 200 in accordance with an embodiment of the present principles;
- **Fig. 4** shows an illustration of an example of a candidate octree-based structure;
- **Fig. 5** shows an illustration of an example of neighboring cubes;
- **Fig. 6** shows the diagram of the sub-steps of the step 210 in accordance with an embodiment of the present principles;
- **Fig. 7** shows schematically a diagram of the steps of the method for decoding, from a bitstream, a point cloud representing a 3D object in accordance with an example of the present principles;
- **Fig. 7b** shows schematically a variant of the method of **Fig. 7;**
- **Fig. 8** shows an example of an architecture of a device in accordance with an example of present principles; and
- **Fig. 9** shows two remote devices communicating over a communication network in accordance with an example of present principles;
- **Fig. 10** shows the syntax of a signal in accordance with an example of present principles.

Similar or same elements are referenced with the same reference numbers.

## 6. Description of Example of the present principles.

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims.

While not explicitly described, the present examples and variants may be employed in any combination or sub-combination.

The present principles are described for encoding/decoding a colored point cloud but extends to the encoding/decoding of a sequence of colored point clouds because each colored point cloud of the sequence is sequentially encoded/decoded as described below.

In the following, an image contains one or several arrays of samples (pixel values) in a specific image/video format which specifies all information relative to the pixel values of an image (or a video) and all information which may be used by a display and/or any other device to visualize and/or decode an image (or video) for example. An image comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

A pixel value is represented by a vector of **nv** values, where **nv** is the number of components. Each value of a vector is represented with a number of bits which defines a maximal dynamic range of the pixel values.

A texture image is an image whose pixel values represents colors of 3D points and a depth image is an image whose pixel values depths of 3D points. Usually, a depth image is a grey levels image.

An octree-based structure comprises a root node, at least one leaf node and possibly intermediate nodes. A leaf node is a node of the octree-based cube which has no child. All other nodes have children. Each node of an octree-based structure is associated with a cube. Thus, an octree-based structure comprises a set $\{C_j\}$ of at least one cube $C_j$ associated with node(s).

A leaf cube is a cube associated with a leaf node of an octree-based structure.

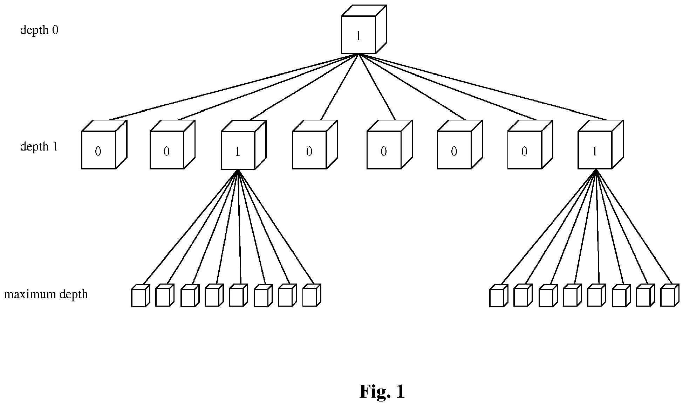

In the example illustrated on **Fig. 1,** the cube associated with the root node (depth 0) is split into 8 sub-cubes (depth 1) and two sub-cubes of depth 1 are then split into 8 sub-cubes (last depth = maximum depth = 2).

The sizes of the cubes of a same depth are usually the same but the present principles are not limited to this example. A specific process may also determine different numbers of sub-cubes per depth, when a cube is split, and/or multiple sizes of cubes of a same depth or according to their depths.

In the following, the term "local octree-based structure determined for a cube" refers to an octree-based structure determined in the 3D space delimited by the cube that encompasses a part of the point cloud to be encoded.

In the opposite, a global octree-based structure refers to an octree-based structure determined in a 3D space delimited by the cube that encompasses the point cloud to be encoded.

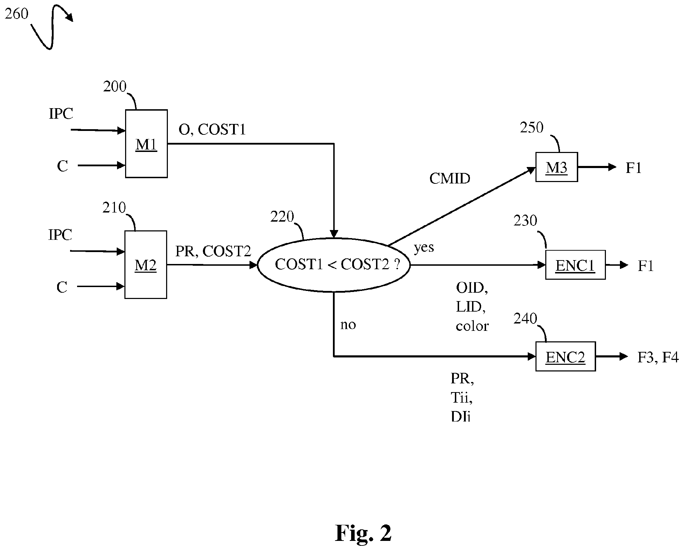

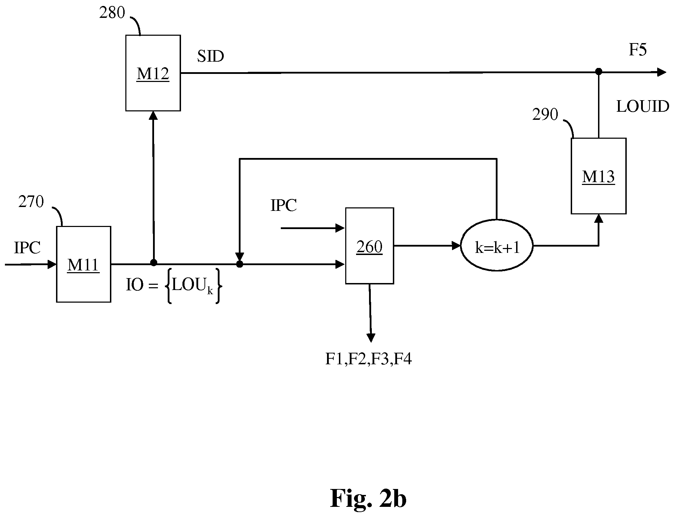

**Fig. 2** shows schematically a diagram of the steps of the method for encoding the geometry of an input colored point cloud IPC representing a 3D object in accordance with an example of the present principles.

In step 200, a module M1 determines, for an octree-based coding mode OCM associated with an encompassing cube C, a best octree-based structure O from N candidate octree-based structures $O_n$ ($n \in [1; N]$) by performing a Rate-Distortion Optimization process. The basic principle is to test successively each candidate octree-based structure $O_n$ and for each candidate octree-based structure $O_n$ to calculate a Lagrangian cost $C_n$ given by:

$$C_n = D_n + \lambda R_n \qquad (1)$$

where $R_n$ is a bit-rate for encoding a candidate octree-based structure $O_n$ approximating the geometry of points $P_{or}$ of the input colored point cloud IPC which are included in the encompassing cube C and for encoding the colors of points $P_{or}$, $D_n$ is a distortion taking into account spatial distances and color differences between, on one hand, the points $P_{or}$ of the input colored point cloud IPC which are included in said encompassing cube C, and on the other hand, points $P_n$, named leaf points in the following, are points which are included in leaf cubes associated with leaf nodes of the candidate octree-based structure $O_n$, and A is a fixed Lagrange parameter that may be fixed for all the candidate octree-based structures $O_{k,n}$.

The best octree-based structure O is then obtained by minimizing the Lagrangian cost $C_n$:

$$O = \underset{O_n}{\mathrm{argmin}}\, C_n(O_n) \qquad (2)$$

The cost COST1 is the minimal cost, among the costs $C_n$, associated with the best octree-based structure O.

High values for the Lagrangian parameter strongly penalize the bit-rate $R_n$ and lead to a low quality of approximation, while low values for the Lagrangian parameter allow easily high values for $R_n$ and lead to high quality of approximation. The range of values for lambda depends on the distortion metric, the size of the encompassing cube C, and most importantly the distance between two adjacent points. Assuming that this distance is unity, typical values for lambda are in the range from a few hundreds, for very poor coding, to a tenth of unity for good coding. These values are indicative and may also depend on the content.

In step 210, a module M2 determines, for a projection-based coding mode PCM associated with the same encompassing cube C, by performing a RDO process, a best projection PR of the points $P_{or}$ of the input colored point cloud IPC which are included in the encompassing cube C from U candidate projections $PR_u$ ($u \in [1; U]$).

A candidate projection $PR_u$ is defined as at least one pair of a texture and depth images obtained by orthogonally projecting the points $P_{or}$ of the input colored point cloud IPC which are included in the encompassing cube C onto at least one face of the encompassing cube C.

The basic principle is to test successively each candidate projection $PR_u$ and for each candidate projection $PR_u$ to calculate a Lagrangian cost $C_u$ given by:

$$C_u = D_u + \lambda_2 R_u \qquad (3)$$

where $R_u$ is a bit-rate for encoding at least one pair of a texture and depth images associated with a candidate projection $PR_u$ approximating the geometry of points $P_{or}$ of the input colored point cloud IPC which are included in the encompassing cube C, $D_u$ is a distortion taking into account spatial distances and color differences between, on one hand, the points $P_{or}$ of the input colored point cloud IPC which are included in the encompassing cube C and, on the other hand, inverse-projected points $P_{IP}$ obtained by inverse-projecting at least one pair of an encoded/decoded texture and a encoded/decoded depth images associated with said candidate projection $PR_u$, and $\lambda_2$ is a fixed Lagrange parameter that may be fixed for all the candidate projection $PR_u$.

The best projection PR is then obtained by minimizing the Lagrangian cost $C_u$:

$$PR = \underset{PR_u}{\mathrm{argmin}}\, C_u(PR_u) \qquad (4)$$

The cost COST2 is the minimal cost associated with the best projection PR.

High values for the Lagrangian parameter strongly penalize the bit-rate $R_u$ and lead to a low quality of approximation, while low values for the Lagrangian parameter allow easily high values for $R_u$ and lead to high quality of approximation. The range of values for lambda depends on the distortion metric, the size of the encompassing cube C, and most importantly the distance between two adjacent points. Assuming that this distance is unity, typical values for lambda are in the range from a few hundreds, for very poor coding, to a tenth of unity for good coding. These values are indicative and may also depend on the content.

In step 220, a module compares the costs COST1 and COST2.

If the cost COST1 is lower than the cost COST2, then in step 230, an encoder ENC1 encodes the points $P_{or}$ of the input colored point cloud IPC which are included in said encompassing cube C according to the octree-based coding mode OCM.

Otherwise, in step 240, an encoder ENC2 encodes the points $P_{or}$ of the input colored point cloud IPC which are included in said encompassing cube C according to the projection-based coding mode PCM.

In step 250, a module M3 encodes a coding mode information data CMID representative of said coding mode associated with the minimal cost.

According to an embodiment of step 250, the coding mode information data CMID is encoded by a binary flag that may be preferably entropy-encoded.

The encoded coding mode information data may be stored and/or transmitted in a bitstream F1.

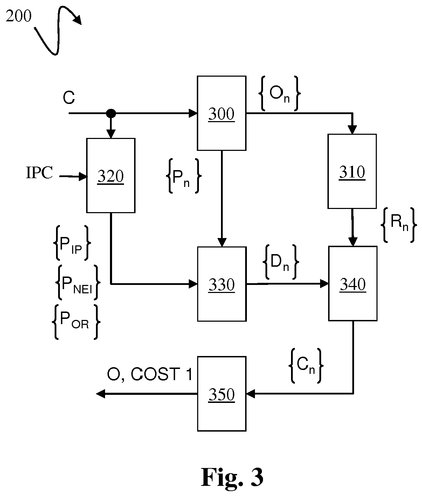

According to an embodiment of step 200, illustrated in **Fig. 3,** the octree-based coding mode is determined as follows.

In step 300, the module M1 obtains a set of N candidate octree-based structures On and obtains a set of leaf points $P_n$ for each candidate octree-based structure On. The leaf points $P_n$ are included in cubes associated with leaf nodes of a candidate octree-based structure On.

In step 310, the module M1 obtains the bit-rate $R_n$ for encoding each candidate octree-based structure On and the colors of the leaf points.

According to an embodiment of step 310, the color of a leaf point equals an average of the colors of the points of the input colored point cloud which are included in the encompassing cube C.

According to another embodiment of step 310, the color of a leaf point equals the color of the closest points of the input colored point cloud. In case there are several closest points, an average is performed on the colors of said closest points to obtain the color of said leaf point included in a leaf cube.

The bit-rate $R_n$ thus depends on the number of bits required for encoding the color of that leaf point.

In step 320, the module M1 obtains points $P_{or}$ of the input colored point cloud IPC which are included in the encompassing cube C.

In step 330, the module M1 obtains a distortion $D_n$ for each candidate octree-based structure On, each distortion $D_n$ takes into account the spatial distances and the color differences between, on one hand, the points $P_{or}$, and on the other hand, the leaf points $P_n$.

In step 340, the module M1 calculates the Lagrangian cost $C_n$ according to equation (1) for each candidate octree-based structure On.

In step 350, the module M1 obtains the best octree-based structure O according to equation (2) once all the candidate octree-based structures On have been considered.

According to an embodiment of step 330, the distortion $D_n$ is a metric given by:

$$D_n = d(P_n, P_{or}) + d(P_{or}, P_n)$$

where d(A,B) is a metric that measures the spatial distance and the color difference from a set of points A to a set of points B. This metric is not symmetric, this means that the distance from A to B differs from the distance from B to A. Consequently, a distortion $D_n$ is obtained by the symmetrization of the distance by

$$D_n = d(A, B) + d(B, A)$$

where A and B are two sets of points.

The distance $d(P_n, P_{or})$ ensures that the leaf points included in leaf cubes associated with leaf nodes of a candidate octree-based structure On are not too far from the points of the input colored point cloud IPC that are included in the encompassing cube C, avoiding coding irrelevant points.

The distance $d(P_{or}, P_n)$ ensures that each point of the input colored point cloud IPC that is included in the encompassing cube C is approximated by leaf points not too far from them, i.e. ensures that those points are well approximated.

According to an embodiment, the distance d(A,B) is given by:

$$d(A, B) = \sum_{p \in A} \|p - q_{\text{closest}}(p, B)\|_2^2 + \|Col(p) - Col(q_{\text{closest}}(p, B))\|_2^2$$

where Col(p) designs the color of point p, the norm is the Euclidan distance and $q_{\text{closest}}(p,B)$ is the closest point of B from a point p of A defined as

$$q_{\text{closest}}(p, B) = \underset{q \in B}{\text{argmin}} \|p - q\|_2^2.$$

According to an embodiment of step 310, in the module M1, a candidate octree-based structure On is represented by an octree information data OID, and a leaf node information data LID indicates if a leaf cube of said candidate octree-based structure On includes a leaf point representative of the geometry of at least one point $P_{or}$

According to an embodiment of step 310, the octree information data OID data comprises a binary flag per node which equal to 1 to indicate that a cube associated with said node is split and to 0 otherwise. The bit-rate $R_n$ depends on the sum of the numbers of the binary flags comprised in the octree information data OID.

According to an embodiment of step 310, the leaf node information data LID comprises a binary flag per leaf node which equal to 1 to indicate if a leaf cube of the candidate octree-based structure On includes a leaf point representative of the geometry of at least one point $P_{or}$ and to 0 otherwise. The bit-rate $R_n$ depends on the sum of the numbers of the binary flags comprised in the leaf node information data LID.

According to an embodiment of step 310, the octree information data OID and/or the leaf node information data LID may be coded using an entropy coder like CABAC (a description of the CABAC is found in the specification of HEVC at http://www.itu.int/rec/T-REC-H.265-201612-I/en). The bit-rate $R_n$ is then obtained from the bit-rate of the entropy-encoded versions of sequences of bits obtained from the octree information data OID and/or the leaf node information data LID.

Entropy encoding the octree information data OID and/or the leaf node information data LID may be efficient in term of coding, because specific contexts may be used to code the binary flags per node because usually only a few nodes of a candidate octree-based structure $O_n$ are split and the probability for the binary flags associated with neighboring nodes to have a same value is high.

According to an embodiment of step 200, a candidate octree-based structure On comprises at least one leaf node and the leaf cube associated to a leaf node may (or not) include a single point.

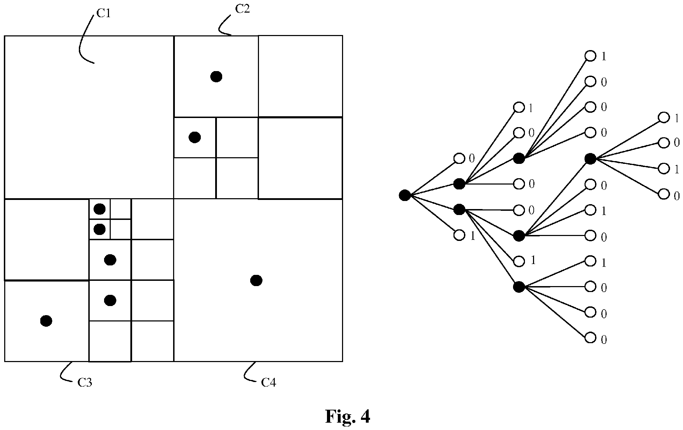

**Fig. 4** shows an illustration of an example of a candidate octree-based structure On according to this embodiment. This figure represents an example of a quadtree-based structure that splits a square, but the reader will easily extend it to the 3D case by replacing the square by a cube, more precisely by the encompassing cube C.

According to this example, the cube is split into 4 sub-cubes C1, C2 C3 and C4 (depth 1). The sub-cube C1 is associated with a leaf node and does not contain any point. The sub-cube C2 is recursively split into 4 sub-cubes (depth 2). The sub-cube C3 is also recursively split and the sub-cube C4 is not split but a point, located in the center of the cube (square on the figure) for example, is associated with it, ..., etc.

On the right part of **Fig. 4** is shown an illustration of the candidate octree-based structure. A black circle indicates that a node is split. A binary flag is associated with each white circle (leaf node) to indicate if the square (a cube in the 3D case) includes (1) or not (0) a leaf point.

According to this example, a leaf point is located in the center of a cube because it avoids any additional information about the spatial location of that point once the cube is identified in the octree-based structure. But the present principles are not limited to this example and may extend to any other spatial location of a point in a cube.

The present principles are not limited to the candidate octree-based structure illustrated on **Fig. 4** but extend to any other octree-based structure comprising at least one leaf node whose associated leaf cube includes at least one point.

According to an alternative to this embodiment of the step 310, the syntax used to encode a candidate octree-based structure $O_n$ may comprise an index of a table (Look-Up-Table) that identifies a candidate octree-based structure among a set of candidate octree-based structures determined beforehand, for example by an end-user. This table of candidate octree-based structures is known at the decoder.

According to an embodiment, a set of bits (one or more bytes) are used for encoding said index of a table and the bit-rate $R_n$ depends on the bit-rate required for encoding said index.

According to a variant of the steps 320 and 330, in step 320, the module M1 obtains neighboring point $P_{NEI}$ which are points included in a neighboring cube $CU_{NEI}$ adjacent (or not) to the encompassing cube C cube.

In step 330, the module M1 obtains a distortion that also takes into account the spatial distances and the color differences between the points $P_{or}$ and the neighboring points $P_{NEI}$.

Mathematically speaking, the distortion $D_n$ is a metric given by:

$$D_n = d(P_n, P_{or}) + d(P_{or}, P_n \cup P_{NEI})$$

The distance $d(P_{or}, P_n \cup P_{NEI})$ ensures also that each point of the input colored point cloud IPC is approximated by points not too far, including also neighboring points included in neighboring cubes $CU_{NEI}$. It is advantageous because it avoids coding too finely points of the input colored point cloud IPC, close to the edge of the neighboring cubes $CU_{NEI}$ that could be already well represented by points included in the neighboring cubes $CU_{NEI}$. Consequently, this saves bit-rates by coding less points, and with a small impact on the distortion.

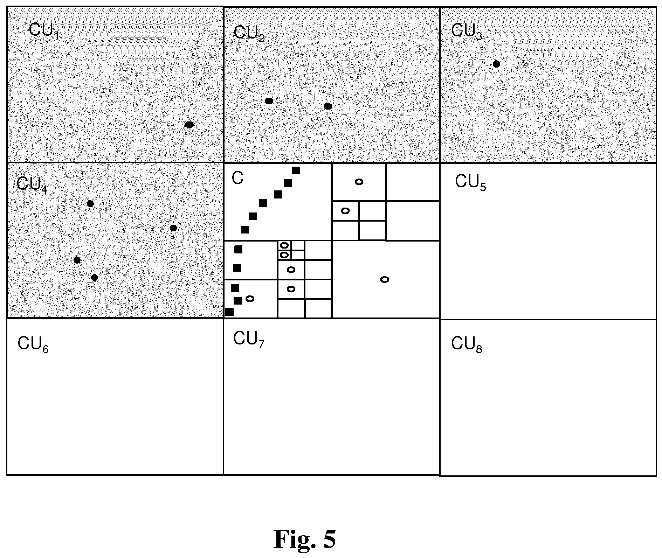

According to an embodiment of this variant, illustrated on **Fig. 5,** the cubes $CU_{NEI}$ are defined in order to have at least one vertex, one edge or one face in common with the encompassing cube C..

**Fig. 5** shows an illustration of an example of neighboring cubes $CU_{NEI}$. This figure represents an example of a quadtree-based structure relative to the encompassing cube C and eight neighboring $CU_{1-8}$ of the encompassing cube C. The points $P_{OR}$ are represented by white rectangles. The points $P_{NEI}$ are represented by black circles. The leaf point $P_n$ are represented by white circles. It is understood that the 2D description is for illustration only. In 3D, one should consider the 26 neighboring cubes instead of the 8 neighboring squares of the 2D illustration.

According to this example, the points $P_{NEI}$ are the points included in four $CU_{NEI=1...4}$.

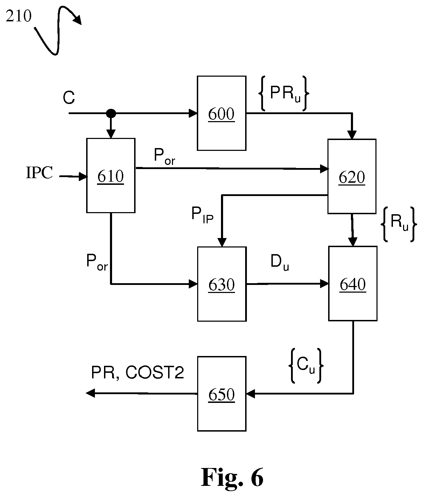

According to an embodiment of step 210, illustrated in **Fig. 6,** the projection-based coding mode is determined as follows.

In step 600, the module M2 obtains a set of U candidate projections PR$_u$ and obtains at least one face $F_i$ for each candidate projection PR$_u$.

In step 610, the module M2 obtains points $P_{or}$ of the input colored point cloud IPC which are included in the encompassing cube C.

In step 620, the module M2 considers each candidate projection PR$_u$ and, for each candidate projection PR$_u$, obtains the bit-rate R$_u$ and inverse-projected points $P_{IP}$ as follows. The module M2 obtains a pair of a texture TI$_i$ and depth DI$_i$ images by orthogonally projecting the points $P_{or}$ onto each face $F_i$ obtained for said current candidate projection PR$_u$. At least one pair of texture and depth images are thus obtained. Then, the module M2 obtains inverse-projected points $P_{IP}$ by inverse-projecting said at least one pair of texture and depth images. The bit-rate R$_u$ is then obtained by estimating the bit-rate needed to encode the at least one pair of texture and depth images.

According to an embodiment of step 620, the module M2 estimates the bit-rate Ruby actually encoding the at least one pair of texture and depth images using a video encoder (such as AVC or HEVC for example), and take R$_u$ as the number of bits needed by said encoder to represent said at least one pair of texture and depth images.

According to another embodiment of step 620, the module M2 estimates the bit-rate R$_u$ from the number of pixels, contained in the at least one pair of texture and depth images, that corresponds to projected points of the input colored point cloud IPC, determines an estimated bit-rate needed to encode each of said pixels, and estimates the bit-rate R$_u$ as the said estimated bit-rate multiplied by said number of pixels. The estimated bit-rate may be provided by a Look-Up Table that depends on the coding parameters of the video encoder (such as AVC or HEVC for example) used for the coding of the at least one pair of texture and depth images.

This embodiment is advantageous because it avoids the actual coding of the at least one pair of texture and depth images, thus reduces the complexity of step 620.

Projection information data drive both the projection of the input colored point cloud IPC onto the faces used by a candidate projection PR$_u$ and the inverse projection to obtain the inverse-projected points $P_{IP}$.

The orthogonal projection projects 3D points included in a cube onto one of its face to create a texture image and a depth image. The resolution of the created texture and depth images may be identical to the cube resolution, for instance points in a 16x16x16 cube are projected on a 16x16 pixel image. By permutation of the axes, one may assume without loss of generality that a face is parallel to the XY plane. Consequently, the depth (i.e. the distance to the face) of a point is obtained by the component Z of the position of the point when the depth value Zface of the face equals 0 or by the distance between the component Z and the depth value Zface of the face.

At the start of the projection process, the texture image may have a uniform predetermined color (grey for example) and the depth image may have a uniform predetermined depth value (a negative value -D for instance). A loop on all points included in the cube is performed. For each point at position (X,Y,Z), if the distance Z - Zface of the point to the face is strictly lower than the depth value of the collocated (in the sense of same X and same Y) pixel in the depth image, then said depth value is replaced by Z - Zface and the color of the collocated pixel the texture image is replaced by the color of said point. After the loop is performed on all points, all depth values of the depth image may be shifted by an offset +D. Practically, the value Zface, the origin for X and Y for the face, as well as the cube position relatively to the face, are obtained from the projection information data.

The offset D is used to discriminate pixels of the images that have been projected (depth is strictly positive) or not (depth is zero).

The orthogonal inverse projection, from a face of a cube, determines inverse projected 3D points in the cube from texture and depth images. The resolution of the face may be identical to the cube resolution, for instance points in a 16x16x16 cube are projected on a 16x16-pixel image. By permutation of the axes, one may assume without loss of generality that the face is parallel to the XY plane. Consequently, the depth (i.e. the distance to the face) of a point may be representative of the component Z of the position of inverse projected point. The face is then located at the value Zface of the Z coordinate, and the cube is located at Z greater than Zface. Practically, the value Zface, the origin for X and Y for the face, as well as the cube position relatively to the face, are obtained from the projection information data.

A loop on all pixels of the depth image is performed. For each pixel at position (X,Y) and depth value V, if the value V is strictly positive, then an inverse projected 3D points may be obtained at location (X,Y, Zface +V - D) and the color of the pixel at position (X,Y) in the texture image may be associated to said points. The value D may be the same positive offset as used in the projection process.

The orthogonal projection and inverse projection process is not limited to the above described process that is provided as an exemplary embodiment only.

By orthogonally inverse projecting several decoded texture and depth images, it may happen that two or more inverse projected 3D points belong to exactly the same position of the 3D space. In this case, said points are replaced by only one point, at said position, whose color is the average color taken on all said inverse projected 3D points.

In step 630, the module M2 obtains a distortion D$_u$, for each candidate projection PR$_u$, by taking into account the points $P_{or}$ of the input colored point cloud IPC which are included in an encompassing cube C and the inverse-projected points $P_{IP}$.

According to an embodiment of step 630, the distortion $D_u$ is a metric given by:

$$D_u = d(P_{IP}, P_{or}) + d(P_{or}, P_{IP})$$

where d(A,B) is a metric that measures the spatial distance from a set of points A to a set of points B. This metric is not symmetric, this means that distance from A to B differs from the distance from B to A.

The distance $d(P_{IP}, P_{or})$ ensures that the inverse-projected points are not too far from the input colored point cloud IPC, avoiding coding irrelevant points.

The distance $d(P_{or}, P_{IP})$ ensures that each point of the input colored point cloud IPC that are included in the encompassing cube C is approximated by points not too far from them, i.e. ensures that those points are well approximated.

According to an embodiment, the distance d(A,B) is given by:

$$d(A, B) = \sum_{p \in A} \|p - q_{\text{closest}}(p, B)\|_2^2 + \|Col(p) - Col(q_{\text{closest}}(p, B))\|_2^2$$

where Col(p) designs the color of point p, the norm is the Euclidan distance and $q_{\text{closest}}(p,B)$ is the closest point of B from a point p of A defined as

$$q_{\text{closest}}(p, B) = \underset{q \in B}{\mathrm{argmin}} \|p - q\|_2^2.$$

According to a variant, the texture and depth images are encoded and decoded before computing the distortion $D_u$.

According to an embodiment of this variant, an 3D-HEVC compliant encoder is used (see Annex J of the HEVC specification on coding tools dedicated to the depth). Such an encoder can natively code jointly a texture and its associated depth, with a claimed gain of about 50% in term of compression performance of the depth video. The texture image is backward compatible with HEVC and, consequently, is compressed with the same performance as with the classical HEVC main profile.

In step 640, the module M2 calculates the Lagrangian cost $C_u$ according to equation (3) for each candidate projection $PR_u$.

In step 650, the module M2 obtains the best octree-based structure PR according to equation (4) once all the candidate projection $PR_u$ have been considered. The cost COST2 is obtained as the cost associated with said best octree-based structure PR.

According to an embodiment, the total number U of candidate projection $PR_u$ is $2^6$-1 = 64-1 = 63. This number is obtained by considering the fact that each of the 6 faces, of the encompassing cube C, may or not be used for projection. This lead to $2^6$=64 combinations. But the case with no face used for projected is obviously excluded, thus the number 63.

According to an embodiment of step 620, the module M2 also estimates the bit-rate associated with projection information data representative of the faces used by a candidate projection $PR_u$. The module M2 considers said projection information data as a single binary data to indicate which face of the encompassing cube C is used by a candidate projection $PR_u$. Consequently, the estimated bit-rate $R_u$ depends also on the sum of said binary flags.

According to a variant of this embodiment, the projection information data may be coded using an entropy coder like CABAC (a description of the CABAC is found in the specification of HEVC at http://www.itu.int/rec/T-REC-H.265-201612-I/en). For instance, a context may be used to code the 6 flags per cube because usually (except for the biggest cube) only a few projections are used and these flags are 0 with high probability. In this case, the bit-rate $R_u$ depends on the bits required to encode the entropy-coded sequences of bits representative of the projection information data.

In step 230 on **Fig. 2,** the encoder ENC1 encodes the points $P_{or}$ of the input colored point cloud IPC which are included in said encompassing cube C according to the octree-based coding mode OCM. Said octree-based coding mode OCM obtains, from the module M1, the best octree-based structure O that is thus encoded by encoding an octree information data OID representative of said best candidate octree-based structure O, and a leaf node information data LID indicating if a leaf cube of said best octree-based structure O includes a leaf point representative of the geometry of at least one point $P_{or}$. The embodiments of the step 310 may applied. A color associated with each leaf point included in a leaf cube associated with a leaf node of the best candidate octree-based structure O is also encoded.

The encoded octree information data OID and/or the encoded leaf node information data LID and/or the color assigned to leaf points may be stored and/or transmitted in a bitstream F1.

In step 240, the encoder ENC2 encodes the points $P_{or}$ of the input colored point cloud IPC which are included in said encompassing cube C according to the projection-based coding mode PCM. Said projection-based coding mode PCM obtains, from the module M2, the best projection PR which used at least one face of the encompassing cubes and what are the at least one pair of texture and depth images obtained by orthogonally projecting the points $P_{or}$ of the input colored point cloud IPC which are included in an encompassing cube C onto said at least one face.

The encoder ENC2 thus encodes said at least one texture and depth images, preferably by using a 3D-HEVC compliant encoder and encodes projection information data representative of the faces used by the best projection PR.

The encoded texture and depth images and/or the projection information data may be stored and/or transmitted in at least one bitstream. For example, the encoded texture and depth images are transmitted in a bitstream F3 and the encoded projection information data is transmitted in a bitstream F4.

**Fig. 2b** shows schematically a diagram of a variant of the encoding method shown in **Fig. 2** (step 260). In this variant, the encompassing cube C, (input of steps 200 and 210) is obtained from an octree-based structure IO as described hereinbelow.

In step 270, a module M11 determines an octree-based structure IO comprising at least one cube, by splitting recursively a cube encompassing the input point cloud IPC until the leaf cubes, associated with the leaf nodes of said octree-based structure IO, reach down an expected size.

The leaf cubes associated with the leaf nodes of the octree-based structure IO may then include or not points of the input point cloud IPC. A leaf cube associated with a leaf node of the octree-based structure IO is named in the following a Largest Octree Unit ($LOU_k$), **k** means an index referencing the Largest Octree Unit associated with a leaf node **k** of the octree-based structure IO.

In step 280, a module M12 encodes a splitting information data SID representative of the octree-based structure IO.

According to an embodiment of step 280, the splitting information data SID comprises a binary flag per node which equal to 1 to indicate that a cube associated with said node is split and to 0 otherwise.

According to an optional variant, the module M12 also generates a maximum depth of the cube splitting.

This avoids signaling splitting information data for all cubes having the maximum depth, i.e. for leaf cubes.

The splitting information data SID and/or the maximum depth may be stored and/or transmitted in a bitstream F5.

In step 260, the process of encoding as shown on **Fig. 2** is applied to each $LOU_k$ instead of the encompassing cube C. Steps 200, 210, 220, 230, 240 and 250 are the same if one expects the replacement of the encompassing cube C by a $LOU_k$. This process of encoding is performed on all the $LOU_k$ indexed by **k.**

Representing the geometry of the point cloud IPC by the octree-based structure IO and by local information (either octree-based structures O or projections PR) at a LOU level is advantageous because it allows to determine locally an optimal representation of the geometry, i.e. the RDO process optimizes the representation on a smaller amount of points, thus reducing dramatically the complexity of optimization which is usually done over the whole set of points of the point cloud.

Another advantage is to obtain a local optimization that adapts better locally to the geometry the point cloud IPC , thus improving the compression capability of the method.

Another advantage is to profit from the possibility of prediction of $LOU_k$ by already coded neighboring $LOU_k$. This advantage is similar to the advantage of decomposing an image into coding blocks as performed in many video compression standards, for instance in HEVC, and then using intra prediction between blocks (here intra prediction of octree-based structure). Also, considering, dynamic point clouds, it is possible to obtain a temporal prediction of a local octree-based structure from already coded points at a preceding time. Again, this advantage is similar to the advantage of inter temporal prediction between blocks as applied in many video compression standards. Using local optimization on a LOU allows for a practical motion search because it is performed on a reasonable amount of points.

According to a variant of step 260, the process of encoding is performed only if there is at least one point of the input point cloud IPC including in the $LOU_k$. Otherwise, the $LOU_k$ is named a non-coded $LOU_k$.

It may also happen that the RDO process determines that the points of the input colored point cloud IPC which are included in the $LOU_k$ are not well represented (coded) neither by an octree O nor by projections PR. This is the case when the cost for coding those points is too high relatively to the cost associated with no coding, i.e. a bit-rate R equal to 0 and a distortion D obtained between already coded points, from other already coded $LOU_k$ for example, and $P_{or}$. In this case, the $LOU_k$ is also named a non-coded $LOU_k$.

$LOU_k$ that are not non-coded $LOU_k$ are named coded $LOU_k$.

In step 290, a module M13 encodes a cube information data LOUID indicating if a $LOU_k$ is coded or non-coded.

According to an embodiment of step 290, the cube information data LOUID is encoded by a binary flag that may be preferably entropy-encoded.

The encoded coding mode information data may be stored and/or transmitted in a bitstream F5.

According to an embodiment of step 290, the cube information data LOUID data comprises a binary flag per $LOU_k$, i.e. per leaf cube associated with the octree-based structure IO, which equal to 1 to indicate that said $LOU_k$ is coded, and to 0 otherwise.

The cube information data LOUID may be stored and/or transmitted in a bitstream F5.

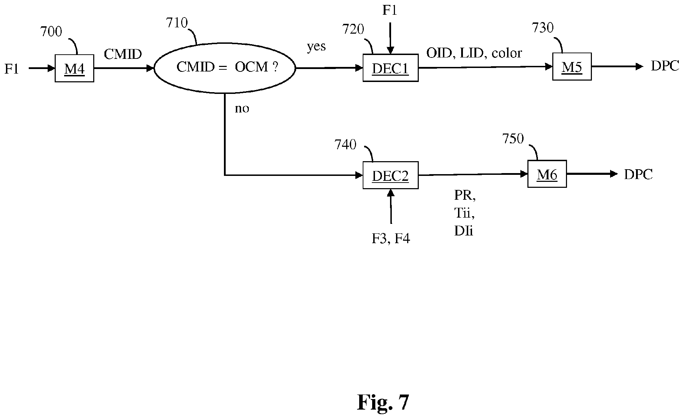

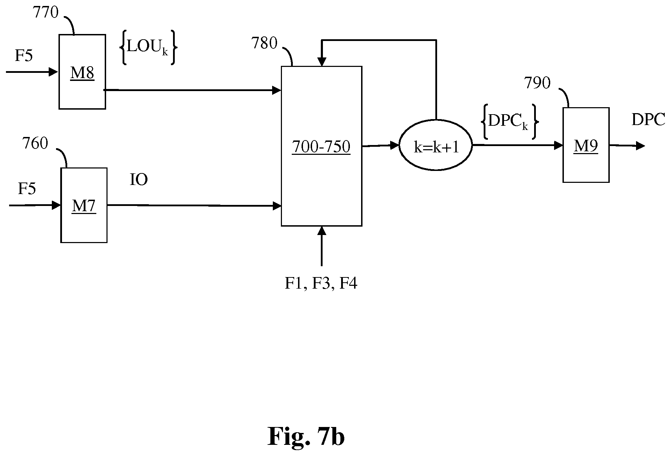

**Fig. 7** shows schematically a diagram of the steps of the method for decoding, from a bitstream, the geometry and colors of a colored point cloud DPC representing a 3D object in accordance with an example of the present principles.

In step 700, a module M4 obtains, optionally from a bitstream F1, a coding mode information data CMID indicating if either an octree-based decoding mode or a projection-based decoding mode has to be used for obtaining a decoded colored point cloud DPC.

In step 710, the coding mode information data CMID is compared to an octree-based coding mode OCM.

If the coding mode information data CMID is representative of the octree-based coding mode OCM, then in step 720, the decoder DEC1 obtains an octree information data OID representative of an octree-based structure O, a leaf node information data LID indicating if a leaf cube of said octree-based structure O includes a leaf point and a color for each of said leaf point.

In step 730, a module M5 obtains the octree-based structure O from the octree information data OID. Then, depending on the leaf node information data LID, a leaf point is associated with a leaf cub associated with a leaf node of said octree-based structure O. The spatial locations of said leaf point may be the center of each of said cubes to which the leaf points are associated with.

The decoded colored point cloud DPC is thus obtained as the list of all said leaf points and the colors, obtained by the module 720, are assigned to each of said leaf point in order to obtain the colors of said decoded colored point cloud DPC.

If the coding mode information data CMID is representative of the projection-based coding mode PCM, in step 740, the decoder DEC2 decodes, from a bitstream F4, projection information data representative of at least one face of a cube, and decodes at least one pair of texture $TI_i$ and depth $DI_i$ images from a bitstream F3.

In step 750, a module M6 obtains inverse-projected points $P_{IP}$ as explained in step 620 and the decoded colored point cloud DPC is formed by these inverse-projected points $P_{IP}$.

**Fig. 7b** shows schematically a diagram of a variant of the decoding methodshown in **Fig. 7.** In this variant, the method first obtains the list of coded $LOU_k$ from the bitstream and then performs the decoding for each coded $LOU_k$, indexed by **k,** in replacement of the encompassing cube C.

In step 760, a module M7 obtains an octree-based structure IO by decoding, from a bitstream F5, a splitting information data SID representative of an octree-based structure IO.

In step 770, a module M8 obtains a list of coded LOUk from cube information data LOUID obtained by decoding a bitstream F5. In step 780, a coded LOUk is decoded as follows.

First, a coding mode information data CMID indicating if either an octree-based decoding mode or a projection-based decoding mode has to be used for obtaining a decoded colored point cloud $DPC_k$ is obtained (step 700) by decoding the bitstream F1. Next, the coding mode information data CMID is compared (step 710) to an octree-based coding mode OCM. If the coding mode information data CMID equals the octree-based coding mode OCM, then the decoded colored point cloud $DPC_k$ is obtained from steps 720 and 730, and if the coding mode information data CMID equals the projection-based coding mode PCM, the decoded colored point cloud $DPC_k$ is obtained from steps 740 and 750.

In step 790, a module M9 fuses the decoded colored point cloud $DPC_k$ together to obtain the decoded colored point cloud DPC.

On **Fig. 1-7,** the modules are functional units, which may or not be in relation with distinguishable physical units. For example, these modules or some of them may be brought together in a unique component or circuit, or contribute to functionalities of a software. *A contrario,* some modules may potentially be composed of separate physical entities. The apparatus which are compatible with the present principles are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

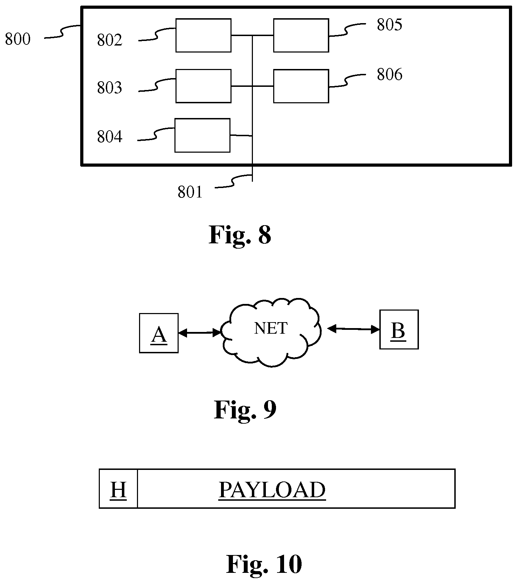

**Fig. 8** represents an exemplary architecture of a device 800 which may be configured to implement a method described in relation with **Fig. 1-7b.**

Device 800 comprises following elements that are linked together by a data and address bus 801:

- a microprocessor 802 (or CPU), which is, for example, a DSP (or Digital Signal Processor);
- a ROM (or Read Only Memory) 803;
- a RAM (or Random Access Memory) 804;
- an I/O interface 805 for reception of data to transmit, from an application; and

- a battery 806.

In accordance with an example, the battery 806 is external to the device. In each of mentioned memory, the word « register » used in the specification can correspond to area of small capacity (some bits) or to very large area (e.g. a whole program or large amount of received or decoded data). The ROM 803 comprises at least a program and parameters. The ROM 803 may store algorithms and instructions to perform techniques in accordance with present principles. When switched on, the CPU 802 uploads the program in the RAM and executes the corresponding instructions.

RAM 804 comprises, in a register, the program executed by the CPU 802 and uploaded after switch on of the device 800, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder, the point cloud IPC is obtained from a source. For example, the source belongs to a set comprising:

- a local memory (803 or 804), e.g. a video memory or a RAM (or Random Access Memory), a flash memory, a ROM (or Read Only Memory), a hard disk ;
- a storage interface (805), e.g. an interface with a mass storage, a RAM, a flash memory, a ROM, an optical disc or a magnetic support;
- a communication interface (805), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Semiconductor)).

In accordance with an example of the decoding or a decoder, the decoded point cloud is sent to a destination; specifically, the destination belongs to a set comprising:

- a local memory (803 or 804), e.g. a video memory or a RAM, a flash memory, a hard disk ;
- a storage interface (805), e.g. an interface with a mass storage, a RAM, a flash memory, a ROM, an optical disc or a magnetic support;
- a communication interface (805), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface);
- a rendering device; and
- a display.

In accordance with examples of encoding or encoder, at least one bitstreams F1-F5 is sent to a destination. As an example, at least one bitstreams F1-F5 is stored in a local or remote memory, e.g. a video memory (804) or a RAM (804), a hard disk (803). In a variant, at least one bitstreams F1-F5 is sent to a storage interface (805), e.g. an interface with a mass storage, a flash memory, ROM, an optical disc or a magnetic support and/or transmitted over a communication interface (805), e.g. an interface to a point to point link, a communication bus, a point to multipoint link or a broadcast network.

In accordance with examples of decoding or decoder, at least one bitstreams F1-F5 is obtained from a source. Exemplarily, a bitstream is read from a local memory, e.g. a video memory (804), a RAM (804), a ROM (803), a flash memory (803) or a hard disk (803). In a variant, at least one bitstreams F1-F5 is received from a storage interface (805), e.g. an interface with a mass storage, a RAM, a ROM, a flash memory, an optical disc or a magnetic support and/or received from a communication interface (805), e.g. an interface to a point to point link, a bus, a point to multipoint link or a broadcast network.

In accordance with examples, device 800 being configured to implement an encoding method described in relation with **Fig. 1-6,** belongs to a set comprising:

- a mobile device ;
- a smartphone or a TV set with 3D capture capability
- a communication device ;
- a game device ;
- a tablet (or tablet computer) ;
- a laptop ;
- a still imagecamera;
- a video camera ;
- an encoding chip;
- a still image server; and
- a video server (e.g. a broadcast server, a video-on-demand server or a web server).

In accordance with examples, device 800 being configured to implement a decoding method described in relation with **Fig. 7-7b,** belongs to a set comprising:

- a mobile device ;
- a Head Mounted Display (HMD)
- (mixed reality) smartglasses
- an holographic device
- a communication device ;
- a game device ;
- a set top box;
- a TV set;
- a tablet (or tablet computer) ;
- a laptop ;
- a display
- a sterescopic display and
- a decoding chip.

According to an example of the present principles, illustrated in **Fig. 8,** in a transmission context between two remote devices A and B over a communication network NET, the device A comprises a processor in relation with memory RAM and ROM which are configured to implement a method for encoding a colored point cloud as described in relation with the **Figs. 1-6** and the device B comprises a processor in relation with memory RAM and ROM which are configured to implement a method for decoding as described in relation with **Fig. 7-7b.**

In accordance with an example, the network is a broadcast network, adapted to broadcast encoded colored point clouds from device A to decoding devices including the device B.

A signal, intended to be transmitted by the device A, carries at least one bitstreams F1-F5.

The signal may carry at least one of the following elements:

- the coding mode information data CMID;
- projection information data;
- the splitting information data SID;
- the cube information data LOUID;
- the octree information data OID;
- the leaf node information data LID;
- a color of a leaf point;
- at least one pair of one texture image $TI_i$, and one depth image $DI_i$.

**Fig. 10** shows an example of the syntax of such a signal when the data are transmitted over a packet-based transmission protocol. Each transmitted packet P comprises a header H and a payload PAYLOAD.

According to embodiments, the payload PAYLOAD may comprise bits representing at least one of the following elements:

- the coding mode information data CMID;
- projection information data;
- the splitting information data SID;
- the cube information data LOUID;
- the octree information data OID;

- the leaf node information data LID;
- a color of a leaf point;
- at least one pair of one texture image $TI_i$, and one depth image $DI_i$.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, a HMD, smart glasses, and any other device for processing an image or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example of the present principles, or to carry as data the actual syntax-values written by a described example of the present principles. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding an input colored point cloud representing the geometry and colors of a 3D object comprising:

   a) determining (100), for an octree-based coding mode (OCM) associated with an encompassing cube (C) including the points of the input point cloud, a best octree-based structure (O) from a plurality of candidate octree-based structures (On) by optimizing a trade-off between a bit-rate ($R_n$) for encoding a candidate octree-based structure ($O_n$) approximating the geometry of original points ($P_{or}$) of the input colored point cloud which are included in said encompassing cube (C) and for encoding their colors, and a distortion ($D_n$) taking into account spatial distances and color differences between, on one hand, said original points ($P_{or}$), and on the other hand, leaf points ($P_n$) included in leaf cubes associated with leaf nodes of the candidate octree-based

structure ($O_n$);

b) determining (210), for a projection-based coding mode (PCM) associated with the same encompassing cube (C), a best projection (PR) of said points ($P_{or}$) from a plurality of candidate projections ($PR_u$) by optimizing a trade-off between a bit-rate ($R_u$) for encoding at least one pair of a texture and depth images associated with a candidate projection ($PR_u$) approximating the geometry and colors of said original points ($P_{or}$) and a distortion taking into account spatial distances and color differences between, on one hand, the points ($P_{or}$) of the input colored point cloud (IPC) which are included in the encompassing cube (C) and, on the other hand, inverse-projected points ($P_{IP}$) obtained by inverse-projecting at least one pair of an encoded/decoded texture and an encoded/decoded depth images associated with said candidate projection ($PR_u$);

c) encoding (230,240) said original points ($P_{or}$) according to a coding mode associated with a minimal coding cost; and

d) encoding (250) a coding mode information data (CMID) representative of the coding mode associated with the minimal cost.

2. A device for encoding an input colored point cloud representing the geometry and colors of a 3D object comprising means for:

a) determining, for an octree-based coding mode (OCM) associated with an encompassing cube (C) including the points of the input point cloud, a best octree-based structure (O) from a plurality of candidate octree-based structures ($O_n$) by optimizing a trade-off between a bit-rate ($R_n$) for encoding a candidate octree-based structure ($O_n$) approximating the geometry of original points ($P_{or}$) of the input colored point cloud which are included in said encompassing cube (C) and for encoding their colors, and a distortion ($D_n$) taking into account spatial distances and color differences between, on one hand, said original points ($P_{or}$), and on the other hand, leaf points ($P_n$) included in leaf cubes associated with leaf nodes of the candidate octree-based structure ($O_n$);

b) determining, for a projection-based coding mode (PCM) associated with the same encompassing cube (C), a best projection (PR) of said points ($P_{or}$) from a plurality of candidate projections ($PR_u$) by optimizing a trade-off between a bit-rate ($R_u$) for encoding at least one pair of a texture and depth images associated with a candidate projection ($PR_u$) approximating the geometry and colors of said original points ($P_{or}$) and a distortion taking into account spatial distances and color differences between, on one hand, the points ($P_{or}$) of the input colored point cloud (IPC) which are included in the encompassing cube (C) and, on the other hand, inverse-projected points ($P_{IP}$) obtained by inverse-projecting at least one pair of an encoded/decoded texture and an encoded/decoded depth images associated with said candidate projection ($PR_u$);

c) encoding said original points ($P_{or}$) according to a coding mode associated with a minimal coding cost; and

d) encoding a coding mode information data (CMID) representative of the coding mode associated with the minimal cost.

3. The method of claim 1 or the device of claim 2, wherein the method also comprises steps of or the device also comprises means for:

- determining (270) an octree-based structure (IO) comprising at least one cube, by splitting recursively said encompassing cube (C) until the leaf cubes, associated with the leaf nodes of said octree-based structure (IO), reach down an expected size;

- encoding (280) a splitting information data (SID) representative of said octree-based structure (IO);

- determining if a leaf cube ($LOU_k$) associated with a leaf node of said octree-based structure (IO) included at least one point of the input colored point cloud;

- encoding (260) said leaf cube ($LOU_k$) from steps a-d; and

- encoding a cube information data (LOUID) indicating if a leaf cube($LOU_k$) is coded or not.

4. The method of claim 1 or 3 or the device of claim 2 or 3, wherein encoding (230) said original points ($P_{or}$) according to the octree-based coding mode (OCM) comprises:

- encoding an octree information data (OID) representative of said best candidate octree-based structure (O), and a leaf node information data (LID) indicating if a leaf cube of said best octree-based structure (O) includes a leaf point representative of the geometry of at least one of said original point ($P_{or}$); and

- encoding a color associated with each leaf point included in a leaf cube associated with a leaf node of the best candidate octree-based structure (O).

5. The method of one of the claims 1, 2-4 or the device of one of the claims 2-4, wherein encoding (230) said original

points ($P_{or}$) according to the projection-based coding mode (PCM) comprises:

- encoding at least one pair of texture and depth images obtained by orthogonally projecting said original points ($P_{or}$) onto at least one face of either said encompassing cube (C) or said leaf cube ($LOU_k$);
- encoding projection information data representative of the faces used by the best projection (PR).

**6.** A method for decoding, from a bitstream, a colored point cloud representing a 3D object comprising:

e) obtaining (700) a coding mode information data (CMID) indicating if either an octree-based decoding mode or a projection-based decoding mode is used for obtaining a decoded colored point cloud;
f) if the coding mode information data (CMID) is representative of an octree-based coding mode (OCM), the method comprises:

- obtaining (720) an octree information data (OID) representative of an octree-based structure (O), a leaf node information data (LID) indicating if a leaf cube of said octree-based structure (O) includes a leaf point, and a color for each of said leaf point;
- obtaining (730) said octree-based structure (O) from the octree information data (OID);
- depending on the leaf node information data (LID), associating a leaf point with a leaf cube associated with a leaf node of said octree-based structure (O); and
- assigning the obtained color to each of said leaf point;

g) if the coding mode information data (CMID) is representative of a projection-based coding mode (PCM), the method comprises:

- decoding (740) projection information data representative of at least one face of a cube;
- decoding at least one pair of texture ($TI_i$) and depth ($DI_i$) images;
- obtaining (750) inverse-projected points ($P_{IP}$) from said at least one pair of decoded texture and depth images according to said projection information data.

**7.** A device for decoding, from a bitstream, a colored point cloud representing a 3D object comprising means for:

e) obtaining a coding mode information data (CMID) indicating if either an octree-based decoding mode or a projection-based decoding mode has to be used for obtaining a decoded colored point cloud;
f) if the coding mode information data (CMID) is representative of a octree-based coding mode (OCM), the method comprises:

- obtaining an octree information data (OID) representative of an octree-based structure (O), a leaf node information data (LID) indicating if a leaf cube of said octree-based structure (O) includes a leaf point, and a color for each of said leaf point;
- obtaining said octree-based structure (O) from the octree information data (OID);
- depending on the leaf node information data (LID), associating a leaf point with a leaf cube associated with a leaf node of said octree-based structure (O); and
- assigning the obtained color to each of said leaf point;

g) if the coding mode information data (CMID) is representative of a projection-based coding mode (PCM), the method comprises:

- decoding projection information data representative of at least one face of a cube;
- decoding at least one pair of texture ($TI_i$) and depth ($DI_i$) image;
- obtaining inverse-projected points ($P_{IP}$) from said at least one pair of decoded texture and depth images according to said projection information data.

**8.** The method of claim 6 or the device of claim 7, wherein the method also comprises steps of or the device also comprises means for:

- obtaining (760) a splitting information data (SID) representative of an octree-based structure (IO);
- obtaining (770) a cube information data (LOUID) indicating if leaf cube associated with a leaf node of said octree-based structure (IO) is coded or not;

- obtaining a local decoded colored point cloud ($DPC_k$) for at least one leaf cube by decoding said at least one leaf cube from steps e-g when said cube information data (LOUID) indicates that a leaf cube has to be decoded; and

- fusing (790) said at least one local decoded colored point cloud ($DPC_k$) together to obtain the decoded colored point cloud (DPC).

9. A signal carrying on a coding mode information data (CMID) representative of either an octree-based coding mode (OCM) associated with an encompassing cube (C) including the points of the input point cloud or a projection-based coding mode (PCM) associated with the same encompassing cube (C).

depth 0

depth 1

maximum depth

**Fig. 1**

**Fig. 2**

**Fig. 2b**

200

C

IPC → 320

$\{P_{IP}\}$

$\{P_{NEI}\}$

$\{P_{OR}\}$

300 $\{O_n\}$

$\{P_n\}$

310

$\{R_n\}$

330 $\{D_n\}$ 340

O, COST 1 ← 350 $\{C_n\}$

**Fig. 3**

**Fig. 4**

**Fig. 5**

**Fig. 6**

F1 → [M4] (700) --CMID--> ( CMID = OCM ? ) (710)

--yes--> [DEC1] (720) ←F1 --OID, LID, color--> [M5] (730) → DPC

--no--> [DEC2] (740) ←F3, F4 --PR, Tii, DIi--> [M6] (750) → DPC

**Fig. 7**

770

F5 → M8 {$LOU_k$}

780

F5 → M7 IO

700-750

k=k+1 {$DPC_k$}

790

M9 → DPC

760

F1, F3, F4

**Fig. 7b**

**Fig. 8**

**Fig. 9**

| H | PAYLOAD |
|---|---------|

**Fig. 10**

Europäisches
Patentamt

European
Patent Office

Office européen
des brevets

# EUROPEAN SEARCH REPORT

Application Number

EP 17 30 5927

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ISO/IEC JTC1/SC29/WG1: "Technical report of the joint ad hoc group for digital representations of light/sound fields for immersive media applications", 72. JPEG MEETING;29-5-2016 - 3-6-2016; GENEVA; (JOINT PICTURE EXPERT GROUP OR ISO/IEC JTC1/SC29/WG1); URL: HTTPS://WWW.ISO.ORG,, no. wg1m72019, 14 December 2016 (2016-12-14), XP030190125, | 1,2,6,7, 9 | INV. H04N19/597 G06T17/00 G06T17/10 G06T9/40 H04N19/96 H04N19/20 H04N19/147 H04N19/103 H04N19/46 |
| Y | * page 14 * * pages 31-47 * | 3-5,8 | |
| A | SEBASTIEN LASSERRE: "Point Cloud Compression presentation to the video groups", 118. MPEG MEETING; 3-4-2017 - 7-4-2017; HOBART; (MOTION PICTURE EXPERT GROUP OR ISO/IEC JTC1/SC29/WG11),, no. m40715, 6 April 2017 (2017-04-06), XP030069059, * pages 11-14 * | 1-9 | |
| Y | EP 1 321 894 A2 (SAMSUNG ELECTRONICS CO LTD [KR]) 25 June 2003 (2003-06-25) * abstract; figures 2, 4, 14, 20, 21, 53, 54 * * paragraphs [0008] - [0015], [0038], [0040] - [0052], [0060], [0066], [0067], [0083], [0116] - [0129], [0149] - [0151] * * paragraphs [0171] - [0175], [0188] - [0190], [0204] - [0207], [0218], [0234], [0329] - [0332], [0304] * | 4,5 | |

-/--

| | |
|---|---|
| | TECHNICAL FIELDS SEARCHED (IPC) |
| | H04N G06T |

The present search report has been drawn up for all claims

| Place of search | Date of completion of the search | Examiner |
|---|---|---|
| Munich | 23 October 2017 | Cakiroglu Garton, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 431 919 A1 (SAMSUNG ELECTRONICS CO LTD [KR]; SEOUL NAT UNIV IND FOUNDATION [KR]) 23 June 2004 (2004-06-23)<br>* abstract; figures 3,5-7, 16-23 *<br>* paragraphs [0001], [0010] - [0019], [0039], [0041], [0046], [0047] *<br>----- | 3,8 | |

TECHNICAL FIELDS
SEARCHED      (IPC)

The present search report has been drawn up for all claims

| Place of search | Date of completion of the search | Examiner |
|---|---|---|
| Munich | 23 October 2017 | Cakiroglu Garton, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 17 30 5927

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2017

| Patent document cited in search report | | Publication date | Patent family member(s) | | Publication date |
|---|---|---|---|---|---|
| EP 1321894 | A2 | 25-06-2003 | CA | 2413056 A1 | 27-05-2003 |
| | | | CN | 1432969 A | 30-07-2003 |
| | | | EP | 1321894 A2 | 25-06-2003 |
| | | | JP | 3957620 B2 | 15-08-2007 |
| | | | JP | 4629005 B2 | 09-02-2011 |
| | | | JP | 2003296755 A | 17-10-2003 |
| | | | JP | 2006318503 A | 24-11-2006 |
| EP 1431919 | A1 | 23-06-2004 | CN | 1549206 A | 24-11-2004 |
| | | | EP | 1431919 A1 | 23-06-2004 |
| | | | JP | 4166679 B2 | 15-10-2008 |
| | | | JP | 2004185628 A | 02-07-2004 |

EPO FORM P0459

For more details about this annex : see Official Journal of the European Patent Office, No. 12/82